# EUROPÄISCHE PATENTANMELDUNG

(11) **EP 1 041 130 A2**
(43) Veröffentlichungstag der Anmeldung: **04.10.2000**
(21) Anmeldenummer: 00106359.3
(22) Anmeldetag: 24.03.2000
(51) Int. Cl.: C09J 5/06

(54) **Verfahren zur Bördelfalzversiegelung**

(30) Priorität: 01.04.1999 DE 19915089; 26.07.1999 DE 19934995
(71) Anmelder: Volkswagen Aktiengesellschaft, 38436 Wolfsburg (DE); Sika AG, vorm. Kaspar Winkler & Co., CH-8048 Zürich (CH)
(72) Erfinder: Schmalbruch, Jörg, 38154 Königslutter (DE); Sonnenberg, Karl-Heinz, Dr., 38442 Wolfsburg (DE); Merz, Peter W., Dr., 8832 Wollerau (CH); Beckord, Volker, 30519 Hannover (DE); Bucher, Patricia, 8049 Zürich (CH)

(57) **Zusammenfassung**

Es wird ein neues Verfahren für die Abdichtung von Karosserieabschnitten, insbesondere für die Bördelfalzversiegelung (5) von Fahrzeuganbauteilen, wie z.B. von Türen, Heck- bzw. Frontklappen oder Schiebedachdeckeln, beschrieben. Das erfindungsgemäße Verfahren beruht auf einer zweifachen Vorvernetzung (6,8) der Versiegelungsmasse (5) im Karosserie-Rohbau. Dabei wird in einem ersten Schrift die Oberfläche einer UV-aktiven Versiegelungsmasse (5) durch UV-Bestrahlung vorvernetzt (6), und in einem zweiten, direkt nachfolgenden Schritt wird durch thermische Einwirkung der Bördelfalzklebstoff (4) und die Versiegelungsmasse (5) angehärtet (8). Die durch das erfindungsgemäße Verfahren produzierten Anbauteile sind transportfähig und besitzen nach Durchgang durch die Reinigungsbäder und nach der Hitzehärtung im KTL-Ofen eine optisch und funktionell einwandfreie Qualität. Da die Versiegelung nicht wie heute im Lackierprozess, sondern im Karosserie-Rohbau durchgeführt wird, beinhaltet das erfindungsgemäße Verfahren ein erhebliches Sparpotential.

## Beschreibung

Die Erfindung betrifft ein Verfahren zur Bördelfalzversiegelung gemäß dem Oberbegriff des Anspruchs 1 oder 4.

Bei der Bördelfalzversiegelung im Kraftfahrzeugbau wird üblicherweise über den nach außen offenen Bereich des Falzes ein aushärtbares Material insbesondere in Form einer Raupe gelegt, das in einem ersten Härtungsprozeß, beispielsweise induktive Erwärmung des Bleches im Bereich der härtbaren Masse, geliert und in einem nachgeschalteten Härtungsprozeß, insbesondere dem KTL-Ofen, vollständig ausgehärtet wird. Als härtbare Masse kommt hier insbesondere PVC zum Einsatz.

Dieses Verfahren bereitet dann Probleme, wenn das härtbare Material Lufteinschlüsse überdeckt oder vor der endgültigen Härtung Flüssigkeiten oder Gase aufgenommen hat, die sich bei der späteren Ofenhärtung ausdehnen und nach außen sichtbare Blasen bilden. Diese Blasen stören zum einen die Optik (optische Einbußen) und bilden zum anderen Schwachstellen der Versiegelung gegen korrosive Angriffe.

In einer alternativen Fertigung bei der Herstellung von Fahrzeuganbauteilen, z.B. von Türen, Heck- und Frontklappen, Schiebedachdeckeln etc., werden zwei Blechteile verbunden. Dabei wird im Karosserie-Rohbau zuerst ein Klebstoff auf das beölte Metallblech, meistens bestehend aus Stahl, feuerverzinktem bzw. elektroverzinktem Stahl oder Aluminium, entlang der Kante des Außenteiles im allgemeinen mittels Wirbelsprühverfahren (bzw. Swirl) in einer Schichtstärke von ca. 0.2 mm aufgetragen und nach Einlegen des Innenteiles wird die Außenkante des Außenteiles um die Peripherie des Innenteiles gebördelt. Die korrosionsgefährdete Kante des Außenteiles wird erst danach im Lackierprozess meistens von Hand mit einem Dichtstoff, wie z.B. PVC-Plastisole, versiegelt. Aus produktionstechnischen, qualitativen und wirtschaftlichen Gründen besteht der Wunsch die Bördelfalzversiegelung aus dem Lackierprozess zu entfernen und in den Karosserie-Rohbau zurückzuverlagern, d.h., das eingangs beschriebene Verfahren einzusetzen. Mit anderen Worten sollen im Lackierprozess keine Applikationen stattfinden, die die Lackoberfläche in irgendeiner Art beeinträchtigen könnte. Bis heute hat sich dieser Wunsch noch nicht zufriedenstellend verwirklichen lassen, da noch kein sicheres und wirtschaftliches Verfahrenskonzept für diese Aufgabe zur Verfügung steht.

In der DE 3314896 A1 wird für die Bördelfalzversiegelung ein Klebstoff beschrieben, welcher mittels Ultraviolett (UV) -Bestrahlung vorvernetzt und thermisch im Ofen nach Durchlauf durch die Reinigungsbäder bei Temperaturen um 180°C zusammen mit der KTL-Grundierung (KTL = kathodische Tauchlackierung), vollständig ausgehärtet wird. Neben den Vorzügen einer UV-Bestrahlung hat sie den Nachteil, dass die Wirkung und somit auch die Vernetzung nur von Außen nach Innen erfolgt. Bei größeren Schichtdicken von mehr als 0.3 mm ist eine ausreichende Vorvernetzung auch bei längerer Bestrahlungsdauer nicht mehr gewährleistet und die darunterliegenden Schichten bleiben unvernetzt im pastösen Zustand. Diese pastöse, unter der vorvernetzten Oberfläche liegende Schicht beinhaltet gewichtige negative Auswirkungen auf die optische Qualität der Versiegelung. Erstens, da die Bauteile zum Teil auch manuell transportiert werden, hat dies zur Folge, dass der Klebstoff zwar anfassbar, jedoch nicht griffest ist, was bei Fingerabdrücken zu einer visuellen Einbusse führen kann. Zweitens besteht die Gefahr, dass dieses unvernetzte Material bei der thermischen Härtung im KTL-Ofen aufgrund der zwischen der Bördelfalzverklebung und der Versiegelung eingeschlossenen Luft auf der Seite der Versiegelung ausgedrückt wird, drittens wird bei der darauffolgenden Abkühlung dieses pastöse Material wiederum in den Bördelfalz eingezogen und viertens neigen Klebstoffe dazu, insbesondere im unvernetzten Zustand Feuchtigkeit aufzunehmen, was bei der thermischen Beaufschlagung im KTL-Ofen zu Blasenbildungen führt. Dieser oben beschriebene Umstand ist insofern von Bedeutung, dass es aus wirtschaftlichen Gründen wünschenswert ist, die Bauteile an einer zentralen Stelle fertig, d.h. inklusive der Versiegelung, herzustellen und von dort an externe, auch weltweit entfernt liegende Fertigungslinien zu spedieren, wo sie direkt in die Reinigungsbäder - der erste Abschnitt des Lackierprozesses - gelangen. Dies beinhaltet ein erhebliches Einsparungspotential, da bei den externen Fertigungslinien auf einen Karosserie-Rohbau und auf die im Lackierprozess ohnehin unerwünschte Versiegelung verzichtet werden kann. Außerdem sollte das neue Verfahren für die Versiegelung ohne größeren finanziellen Aufwand und einwandfrei in bestehende Fertigungsabläufe im Rohbau integrieren lassen. Die Anschaffung eines weiteren Ofens wäre absolut nicht akzeptabel.

Aufgabe der Erfindung ist es, eine Bördelfalzversiegelung derart durchzuführen, daß eine Blasenbildung durch eingeschlossene Gase oder Flüssigkeiten bei der späteren Ofenbehandlung unterdrückt ist bzw. ein gutes Handling der versiegelten Teile im Gesamtprozeß gewährleistet ist.

Diese Aufgabe wird gelöst mit den Maßnahmen gemäß Anspruch 1, 4, 6 und/oder 8. Die Unteransprüche zeigen bevorzugte Ausführungsformen.

Die vorliegende Erfindung betrifft ein spezielles Verfahren für die Herstellung von Fahrzeuganbauteilen, insbesondere bezieht sich die Erfindung auf ein neues Verfahren für die Bördelfalzversiegelung. Mit dem neuen Verfahren wird der Fertigungsablauf wesentlich vereinfacht und die Qualität erhöht.

Ziel der vorliegenden Erfindung war die Nachteile des Standes der Technik zu überwinden und ein neues Verfahren für die Bördelfalzversiegelung bereitzustellen, welches alle Anforderungen für eine sichere Herstellung von Anbauteilen und insbesondere auch für einen weltweiten Transport der "rohen" bzw. beölten Anbauteile, auch als Teiletourismus bezeichnet, erfüllt. Dabei steht die optische Qualität der Bördelfalzversiegelung im Vordergrund, welche auch nach einem längeren Transport der Anbauteile durch verschiedene klimatischen Zonen einwandfrei bleibt und eine glatte Oberfläche ohne Krater, Risse etc. gewährleistet. Das neue Verfahren lässt sich ohne grössere Investitionen in den Karosserie-Rohbau einführen, und mit dem neuen Verfahren können wesentliche Fertigungsvorteile gewonnen werden.

Gemäß der vorliegenden Erfindung erfolgt die Härtung der Versiegelung gemäß der einen Variante (auch) durch eine photochemische Reaktion, die durch Licht, insbesondere UV-Licht, induziert wird, kombiniert mit einer mehrstufigen Härtung. Je nach Art der Versiegelung hat das UV-Licht eine Eindringtiefe von ca. 0.01 bis 1 mm, so daß eine Oberflächenhärtung der Versiegelung erreicht wird. Ein tieferes Eindringen der UV-Strahlung ist auch möglich. Die so versiegelte Oberfläche ist geschützt gegen das Eindringen von Gasen oder Flüssigkeiten in die Versiegelung, so daß bei einem späteren thermischen Härten keine Blasen aufgeworfen werden. Außerdem ist durch die bereits vorliegende Oberflächenhärtung ein Austreten bereits eingeschlossener Gase bei einer thermischen Härtung unterdrückt bis verhindert.

Vorteilhaft erfolgt die photochemische Härtung derart, dass bei der anschließenden thermischen Härtung der bereits photochemisch gehärtete Bereich der Masse durch die thermische Härtung nachgehärtet wird, d.h. daß funktionelle Gruppen sowohl für die photochemische als auch für die thermische Härtung nebeneinander vorliegen, die nacheinander zur die Härtung bewirkenden Vernetzung (Reaktion) gebracht werden. Hierdurch wird eine besonders stabile Oberfläche der Versiegelungsmasse geschaffen.

Für alle Verfahrensvarianten gilt, daß auch eine Versiegelung eingesetzt werden kann, deren Härtung exotherm abläuft, wodurch der angestoßene Härtungsprozeß zumindest teilweise weiterverläuft und entsprechend eine weiter fortgeschrittene Aushärtung erreicht wird.

In einer alternativen Ausgestaltung werden erfindungsgemäß mindestens zwei nicht gleichartige Härtungsprozesse vor einer Beschichtung des versiegelten Karosserieabschnitts durchgeführt. Vorzugsweise ist einer der Härtungsprozesse auf die äußere Oberfläche der Versiegelung abgestellt und der andere Härtungsprozeß auf den Kontaktbereich der Versiegelung zu dem Karosserieabschnitt. Hierdurch wird erreicht, daß die Versiegelung im Verlaufe des Beschichtungsprozesses, insbesondere einer diesem vorgeschalteten Flüssigreinigung (insbesondere mittels einer wässrigen Lösung) bzw. in einer (wässrigen) Tauchlackierung, beispielsweise KTL, keine Flüssigkeit aufnimmt, die bei einer späteren thermischen Aushärtung (z.B. im KTL-Ofen) zur Blasenbildung führt.

In einer weiteren alternativen Variante erfolgt die thermische Härtung zumindest in einer ersten Stufe ofenfrei bzw. durch nur partielle Erwärmung des mit der Versiegelung versehenen Karosserieabschnitts. Hierdurch wird insgesamt ein günstiger Prozeßablauf erreicht, indem eine gegen spätere Blasenbildung genügende Härtung ohne großen Prozeßaufwand in das Gesamtverfahren integriert wird.

In einer weiteren alternativen Ausgestaltung der Erfindung wird das Verfahren derart durchgeführt, daß die zwei nicht gleichartigen Härtungsprozesse in einem zeitlichen Abstand von weniger als 2 Stunden durchgeführt werden. Hierdurch wird eine genügende Aushärtung der Versiegelung erreicht, ohne das diese eine deutliche Menge an Gasen oder Flüssigkeiten, die zu den oben geschilderten Problemen führen können, aufnehmen kann. Vorteilhaft ist der zeitliche Abstand geringer als eine Stunde, bevorzugt geringer als 20 Minuten und insbesondere kleiner als 5 Minuten, d.h., die beiden Härtungsprozesse erfolgen vorteilhaft gleichzeitig oder (unmittelbar) aufeinanderfolgend, ohne einen weiteren zwischengeschalteten Prozeßschritt.

Erfindungsgemäß sind alle alternativen Prozesse vorteilhaft miteinander kombinierbar.

Die erfindungsgemäßen Verfahren beruhen auf einer mindestens zweifachen (Vor)vernetzung der Bördelfalzversiegelung. Dabei wird in einem ersten Fertigungsschritt die UV-aktive Versiegelungsmasse mittels UV-Bestrahlung zur Reaktion gebracht und in einer zweiten direkt nachfolgenden Station wird vorteilhaft sowohl der Bördelfalzklebstoff als auch die Versiegelung von innen durch thermische Erwärmung (vor)vernetzt.

Die Härtung von Außen mittels UV-Bestrahlung vernetzt teilweise die Bördelfalzversiegelung und bewirkt erstens eine für die manuelle Handhabung wichtige Anfassbarkeit bzw. Griffestigkeit, zweitens eine Auswaschbeständigkeit gegenüber den bis zu 70°C heißen, mit hohem Druck zirkulierenden Flüssigkeiten in den Reinigungsbädern für das Entfetten der beölten Karosserie, das Phosphatieren und den Durchgang durch das kathodische Tauchlackbad (KTL) und drittens aufgrund der fortgeschrittenen Vernetzung eine lange Offenliegezeit zum Teil auch in heiss-feuchten klimatischen Bedingungen von mehr als 3 Wochen. Die Offenliegezeit definiert die Zeit, innerhalb der der Klebstoff die spezifizierte Funktion erfüllt und keine Qualitätseinbuße nach der vollständigen Härtung im KTL-Ofen, welche bei Temperaturen um 180°C innerhalb von ca. 25 Minuten erfolgt, erleidet. Der Klebstoff neigt im allgemeinen dazu im nicht 100%ig vernetzten Zustand, Wasser aufzunehmen, was bei der Hitzehärtung zu Blasenbildungen führt und sowohl die Optik als auch die Festigkeit negativ beeinflussen kann.

Für den mit UV-Strahlung vernetzenden Bestandteil des Klebstoffes kommen aktivierte Doppelbindungen, wie z.B. Acrylatgruppen enthaltende Verbindungen, in Frage, wobei die Auslösung der radikalischen Polymerreaktion über einen Photoinitiator - einen mit UV-Strahlen initiierten Radikalbildner - erfolgt. Abhängig vom Photoinitiator liegt die optimale Wellenlänge im Bereich von 200 bis 400 nm. Um ein zufriedenstellendes Ergebnis bezüglich der Griffestigkeit etc. zu erlangen, ist eine Bestrahlungsdauer von weniger als 30 s insbesondere weniger als 5 s bei einer Intensität von insbesondere 0,001 bis 50 Watt/cm² geeignet. Dies ermöglicht ein rationelles Verfahren, bei dem z.B. die UV-Bestrahlung direkt nach dem Auftrag der Versiegelung im gleichen Arbeitsschritt mittels Roboter durchgeführt werden kann. Die UV-Lampe sitzt vorteilhaft quasi hinter der Applikationsdüse für die Versiegelung.

Die thermische Härtung von innen vernetzt teilweise die Bördelfalzverklebung sowie die -versiegelung und bewirkt eine Positionsfestigkeit, was ein Verschieben der beiden Blechteile, d.h. Innenteil zum Außenteil, zueinander ausschließt. Als thermische Quellen kommen z.B. Induktion, Infrarot (IR)-Bestrahlung, Heißluftfön etc. in Frage. Im Falle von der IR-Bestrahlung kann zwar auf die teure Investition für eine Induktionsanlage verzichtet werden, ist jedoch nicht so leistungsfähig wie die induktive Erhitzung.

Mit der Erfindung wurde herausgefunden, dass die doppelstufige Härtung auch ohne vollständige Durchhärtung für eine ausreichende Positionsfestigkeit der Anbauteile ausreichend ist, da auch die mit UV-Bestrahlung gehärtete Versiegelung zur strukturellen Festigkeit beiträgt. Auch ist es denkbar, die IR-Lampen direkt nach der UV-Bestrahlung mit dem Roboter nachzuführen. Für eine einwandfreie Qualität der Versiegelungsoberfläche ist es vorteilhaft, wenn die UV-Bestrahlung vor der thermischen Beaufschlagung erfolgt. Damit wird gewährleistet, dass die gegebenenfalls zwischen der Bördelfalzverklebung und Versiegelung vorhandene Luft bei der thermischen Erwärmung durch die UV-vorvernetzte Versiegelungsoberfläche zurückgehalten wird.

Ausserdem kann in einer bevorzugten Ausführung die mit UV-Bestrahlung induzierte Reaktion beschleunigt werden, indem die Versiegelungsmasse z.B. auf Temperaturen um 60°C erwärmt wird. Dies kann dadurch erfolgen, daß die aufzutragende Versiegelungsmasse selbst und/oder der Bördelfalz kurz vor der Applikation der Versiegelungsmasse z.B. mittels Heißluftfön und/oder induktiv erhitzt wird, um damit die anschließend aufgetragene Versiegelungsmasse vorzuwärmen.

Vorteilhaft sind insbesondere die Erwärmung mittels IR bzw. Heißlufttön, da hierdurch die Gefahr von Verzügen der Bauteile deutlich herabgesetzt bzw. eliminiert ist, da diese thermisch weniger beansprucht werden, wie dies z.B. bei der induktiven Erhitzung der Fall ist.

Eine optische Einbusse ist aufgrund von Lufteinschlüssen in der Bördelung zwischen der Verklebung und Versiegelung stark herabgesetzt, da der Klebstoff mit der zweifachen Vorvernetzung in kurzer Zeit eine genügend hohe Festigkeit aufbaut und somit sowohl Luftdurchschüsse bei der Erhitzung im KTL-Ofen als auch Einziehen von Klebstoffmaterial in die Bärdelung bei der Abkühlung verhindert.

Da die Versiegelung nicht wie heute in der Lackiererei von Hand, sondern im Rohbau mittels Roboter materialsparend und demzufolge wirtschaftlicher durchgeführt werden kann, können Ressourcen, wie Raum und Zeitbedarf in der Lackiererei eingespart werden.

Das erfindungsgemäße Verfahren beinhaltet Eigenschaftsvorteile, wie gute Handhabungs- bzw. Positionsfestigkeit sowie lange Offenliegezeit, erfüllt somit alle Forderungen für einen sicheren Transport sowohl intern als auch extern und überwindet die Nachteile des Standes der Technik, bei der die Qualität aufgrund von Blasenbildungen herabgesetzt wird. Die erfindungsgemäßen Vorteile erlauben eine zentrale Fertigung von Bauteilen, wie z.B. von Türen, Heck- und Frontklappen, Schiebedachdeckeln etc., und deren Versand an externe Fertigungslinien. Dieser Teiletourismus wird auch als CKD (=completely knocked down) bezeichnet und ist wirtschaftlich, da auf Investitionen für die Herstellung des Karosserierohbaues verzichtet werden kann.

Der Bördelfalzklebstoff soll für eine optimale Verarbeitung in dünnen Schichten applizierbar sein und eine gute Ölbenetzung aufweisen. Nach der Hitzehärtung im KTL-Ofen ist eine gute und alterungsbeständige Haftung auf den metallischen Substraten, eine Festigkeit von mehr als 15 MPa und eine Bruchdehnung von mindestens 5 % gefordert.

Für die Versiegelung kann der gleiche Klebstoffe eingesetzt werden, wobei dieser dann Komponenten beinhaltet, die in der besten Ausführungsart sowohl mit UV-Bestrahlung als auch thermisch zur Reaktion gebracht werden können. Ferner soll dann die Bruchdehnung mindestens 15 %, besser 30 % betragen, um bei den thermischen Spannungen keine Rissbildungen zu riskieren.

Die oben beschriebenen Klebstoffe sind in der Regel auf der Basis der Epoxid-Technologie, Kautschuk-Technologie oder Acrylat-Technologie etc. und auch in Kombination mit geeigneten Polyurethankomponenten oder organischen Polymerfüllstoffen formuliert. Einige Beispiele liefert die DE 33 14 896 A1, auf die auch insbesondere hinsichtlich der Reaktionsbedingungen Bezug genommen wird. Der Auftrag der Versiegelung erfolgt vorteilhaft in einer Stärke von 150-4000 µm, insbesondere im Bereich 350-1000 µm. Vorzugsweise wird die Versiegelung in Form einer Raupe aufgetragen, wobei der Raupenauftrag z.B. als Swirl erfolgen kann.

Eine lichtinduzierte Härtung, insbesondere mittels UV-Licht, kann vorteilhaft unmittelbar nach dem Auftrag der Versiegelung erfolgen, vorzugsweise spätestens wenige Minuten nach dem Auftrag. Die UV-Bestrahlung kann gleichzeitig, vorher oder später mit einer weiteren Härtung erfolgen, insbesondere einer IR-, Heißluftfön- oder Induktionshärtung, bei der die zu versiegelnden Blechbereiche bzw. unmittelbar benachbarte Blechbereiche erwärmt werden.

Je nach verwendeter Versiegelung ist darauf zu achten, daß insbesondere bei einer nicht genügenden exothermen Härtung eine Härtung möglicherweise unterbleibt, wenn der Härtungsprozeß nicht mit einer genügenden Intensität durchgeführt wird. Zur Sicherstellung des Erfolgs des Härtungsprozesses ist entsprechend mit einer genügenden Intensität der die Härtung bewirkenden Parameter (UV-Licht, Wärme, etc.) zu arbeiten.

Vorteilhaft erfolgt die Versiegelung mit einem Material, bei dem die Härtungsmindesttemperatur auf beispielsweise ≤140 °C eingestellt ist, wodurch insbesondere eine Induktionshärtung möglich ist. Die üblicherweise eingesetzten Epoxidharze mit einer erforderlichen Härtetemperatur von = 150 °C, insbesondere = 170 °C, sind hier weniger geeignet. Solche Epoxide können jedoch im Inneren des Falzes eingesetzt werden, da hierbei die Aushärtung später in KTL-Ofen problemlos erfolgt.

Die Erfindung wird im folgenden anhand zweier Zeichnungen beschrieben.

Es zeigen
Figur 1 einen Schnitt durch einen Türfalz mit aufgebrachter Versiegelung; und
Figur 2 einen Schnitt durch einen Türfalz mit möglichem Versiegelungsproblem.

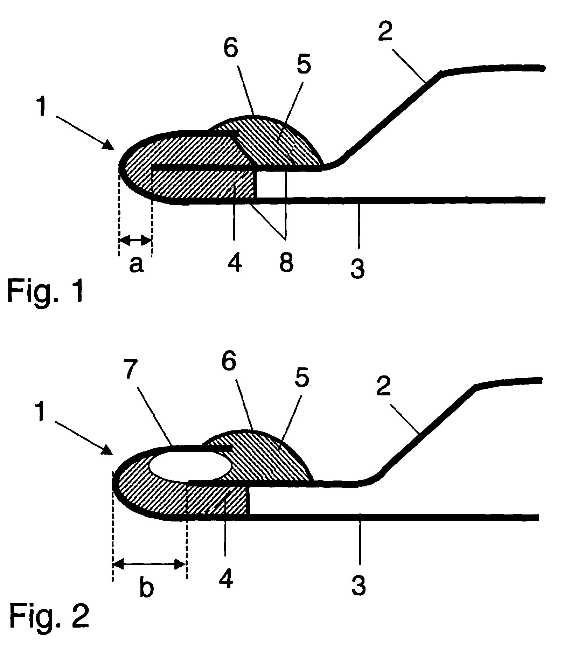

Die Figur 1 zeigt ein Türaußenblech 3, das über ein Türinnenblech 2 gefalzt ist und im Bereich des Falzes 1 mit einem Bördelfalzklebstoff 4 verbunden ist. Der Bördelfalzklebstoff 4 wird vor dem Falzen aufgetragen und ist in seiner Menge so bemessen, daß er bei einem Abstand a (Türinnenblech 2 - Fatzbiegung) den gesamten Falzbereich ausfüllt. Über den äußeren Falzbereich ist eine Versiegelung 5 aufgetragen, welche durch UV-Bestrahlung von außen 6 und durch eine induktive Erhitzung des Falzbereiches 1 von unten 8 soweit vorvernetzt wird, daß sie griffest, dicht gegen aufblühende Gase und dicht gegen das Eindringen von Gasen oder Flüssigkeiten ist.

In Figur 2 ist der gleiche Falz 1 wie in Figur 1 dargestellt, jedoch mit einer Verschiebung b des Türinnenblechs 2 bezüglich des Türaußenblechs 3, so daß die eingebrachte Menge des Bördelfalzklebstoffs 4 den Falz nicht vollständig ausfüllt. Hierdurch kann durch die Überschichtung mit der Versiegelung 5 eine Luftblase 7 eingeschlossen werden, die sich bei den bisher durchgeführten Härtungsprozessen im KTL-Ofen ausdehnt und die Versiegelung 5 aufbläht. Bei den erfindungsgemäßen Verfahren ist die Versiegelung 5 jedoch doppelt 6,8 vorgehärtet, so daß bei einer späteren endgültigen Härtung in KTL-Ofen die eingeschlossene Luftblase 7 nicht mehr durchbrechen kann.

### Bezugszeichenliste

- 1: Türfalz
- 2: Innenblech
- 3: Aussenblech
- 4: Bördelfalzklebstoff
- 5: Versiegelungsmasse
- 6: UV-gehärtete Oberfläche
- 7: Lufteinschluss
- 8: thermische Härtung
- a zu b: Blechverschiebung

## Patentansprüche

1. Verfahren zum Versiegeln eines Karosserieabschnitts durch Auftrag einer Versiegelungsmasse auf den Karosserieabschnitt und Härten der Versiegelungsmasse mittels mindestens zweier nicht gleichartiger Härtungsprozesse, wobei einer der Härtungsprozesse eine photochemische und ein weiterer eine thermische Härtung beinhaltet, dadurch gekennzeichnet, daß die thermische Härtung mehrstufig ausgeführt wird.

2. Verfahren nach Anspruch 1, dadurch gekennzeichnet, daß die photochemische Härtung und/oder die erste Stufe der thermischen Härtung vor einer Beschichtung oder Benetzung des Karosserieabschnitts durchgeführt werden.

3. Verfahren nach Anspruch 2, dadurch gekennzeichnet, daß die Teilhärtungen vor einer Lackierung des Karosserieabschnitts durchgeführt werden.

4. Verfahren zum Versiegeln eines Karosserieabschnitts durch Auftrag einer Versiegelungsmasse auf den Karosserieabschnitt und Härten der Versiegelungsmasse, dadurch gekennzeichnet, daß die Versiegelungsmasse mittels zweier nicht gleichartiger Härtungsprozesse gehärtet wird, die vor einer Beschichtung oder Benetzung des Karosserieabschnitts, insbesondere einer Lackierung durchgeführt werden.

5. Verfahren nach Anspruch 4, dadurch gekennzeichnet, daß einer der Härtungsprozesse insbesondere die äußere Oberfläche der Versiegelung härtet und der andere Härtungsprozeß entweder insbesondere den Kontaktbereich der Versiegelung mit dem Karosserieabschnitt oder innere Bereiche der Versiegelung härtet.

6. Verfahren nach einem der vorhergehenden Ansprüche, dadurch gekennzeichnet, daß die thermische Härtung durch nur partielle Erwärmung des Karosserieabschnitts und/oder zumindest in einer ersten Stufe ofenfrei erfolgt, insbesondere durch induktive Erwärmung, IR-Strahlung und/oder Heißluftfön.

7. Verfahren zum Versiegeln eines Karosserieabschnitts durch Auftrag einer Versiegelungsmasse auf den Karosserieabschnitt und Härten der Versiegelungsmasse mittels mindestens zweier nicht gleichartiger Härtungsprozesse, wobei einer der Härtungsprozesse eine photochemische und ein weiterer eine thermische Härtung beinhaltet, dadurch gekennzeichnet, daß die thermische Härtung durch nur partielle Erwärmung des Karosserieabschnitts und/oder zumindest in einer ersten Stufe ofenfrei erfolgt, insbesondere durch induktive Erwärmung, IR-Strahlung und /oder Heißluftfön.

8. Verfahren nach einem der vorhergehenden Ansprüche, dadurch gekennzeichnet, daß die nicht gleichartigen Härtungsprozesse in einem zeitlichen Abstand von weniger als zwei Stunden durchgeführt werden.

9. Verfahren zum Versiegeln eines Karosserieabschnitts durch Auftrag einer Versiegelungsmasse auf den Karosserieabschnitt und Härten der Versiegelungsmasse, dadurch gekennzeichnet, daß die Versiegelungsmasse mittels zweier nicht gleichartiger Härtungsprozesse gehärtet wird, die in einem zeitlichen Abstand von weniger als zwei Stunden durchgeführt werden.

10. Verfahren nach Anspruch 8 oder 9, dadurch gekennzeichnet, daß die Härtungsprozesse in einem zeitlichen Abstand von weniger als einer Stunde, insbesondere weniger als 20 Minuten und vorzugsweise in einem Abstand von weniger als 5 Minuten durchgeführt werden.

11. Verfahren nach einem der vorhergehenden Ansprüche, dadurch gekennzeichnet, daß die Härtungsprozesse ausgewählt sind aus einer Ofenhärtung, induktive Härtung, Härtung mittels eines Heißluftföns, photochemische Härtung, reaktive Nachhärtung ohne besondere Energiezufuhr.

12. Verfahren nach einem der vorhergehenden Ansprüche, dadurch gekennzeichnet, daß die nicht gleichartigen Härtungsprozesse mindestens zu einer Oberflächenhärte der Versiegelungsmasse für eine Anfaßbarkeit bzw. Griffestigkeit für eine manuelle Handhabung durchgeführt werden und/oder bis zu einer Auswaschbeständigkeit mit bis zu 70 °C heißen, zirkulierenden Reinigungsbädern für das Entfetten geölter Karosserieteile, das Phosphatieren und/oder eine elektronische Tauchlackierung und/oder eine Offenliegezeit unter tropisch klimatischen Bedingungen von mehr als drei Wochen.

13. Verfahren nach einem der vorhergehenden Ansprüche, dadurch gekennzeichnet, daß einer der ersten Härtungsprozesse durchgeführt wird, bis die Versiegelung mindestens eine Festigkeit, insbesondere im Kontaktbereich zum Karosserieabschnitt, hat, daB in der weiteren Prozeßfolge optische Einbußen aufgrund von Lufteinschlüssen zwischen der Verklebung und der Versiegelung stark herabsetzt sind.

14. Verfahren nach einem der vorhergehenden Ansprüche, dadurch gekennzeichnet, dass die Versiegelungsmasse zur Beschleunigung der mittels UV-Bestrahlung induzierten Vorvernetzung über den thermisch vorgewärmten Bördelfalz erwärmt wird.

15. Verfahren nach Anspruch 14, dadurch gekennzeichnet, dass die thermische Erwärmung des Bördelfalzes mit einem Heißluftfön kurz vor der Applikation der Versiegelungsmasse erfolgt.

16. Verfahren nach einem der vorhergehenden Ansprüche, dadurch gekennzeichnet, daß im Karosserie-Rohbau die Bördelfalzversiegelung sowohl mit UV-Strahlen als auch thermisch zusammen mit der Bördelfalzverklebung vorgehärtet werden, die so hergestellten Anbauteile transportiert werden und danach, nach Durchgang durch zumindest ein Reinigungsbad und eine Lackierung, insbesondere ohne optische bzw. funktionelle Einbusse der Versiegelung, im Ofen zusammen mit der Lackierung vollständig thermisch gehärtet werden.
